# EUROPEAN PATENT SPECIFICATION

(11) **EP 1 025 972 B1**
(45) Date of publication and mention of the grant of the patent: **23.11.2005**
(21) Application number: 99870021.5
(22) Date of filing: 03.02.1999
(51) Int. Cl.: B29C 33/36, B29C 44/28, B65G 15/30

(54) **Method for the manufacture of a continuous foam layer**
Verfahren zur Bldung einer kontinuierlichen Schaumstoffschicht
Procédé pour la fabrication en continu d'une couche en mousse

(43) Date of publication of application: 09.08.2000
(73) Proprietor: Latexco NV, 8700 Tielt (BE)
(72) Inventor: Groenweghe, Ronald, 8510 Marcke-Kortrijk (BE)
(74) Representative: Van Reet, Joseph

(56) References cited:
- EP-A- 0 358 914
- EP-A- 0 489 675
- DE-A- 19 619 429
- GB-A- 1 535 613

## Description

The present invention relates to a method for the manufacture of a continuous foam layer starting from a foam forming mixture and using a device comprising an endless conveyor providing a surface arranged for producing the foam layer thereon, means for rotating the conveyor in one direction, means for depositing said foam forming mixture at a first end onto said surface, and means for removing the produced foam layer at a second end from said surface, the conveyor comprising slats which form said surface and which are mounted on links of a chain structure.

Such a device is disclosed for example in EP-A2-0 358 914. This known device is used for making a continuous layer of latex foam which is subsequently cut into smaller pieces having in particular the dimensions of a mattress. The slats which form the surface onto which the foam is produced are rigidly fixed, at both extremities thereof, to two lateral chains. In order to vulcanize the latex foam, it is guided by the conveyor through a tunnel vulcanizer wherein steam is introduced. By the contact with the steam, the slats and the latex foam situated thereon are heated. A drawback of this known device is that the slats cannot fit accurately against one another, in particular not in the area where the foam forming mixture is laid down on the conveyor, in view of the different thermal expansion coefficient of the aluminium slats and the chains which are normally made of steel. Indeed, since the thermal expansion coefficient of aluminium is greater than that of steel, a sufficient gap has to exist between the different slats so that they can expand in the tunnel vulcanizer relative to the chains. Moreover, in case the chains are stretched somewhat upon a prolonged use, a gap is also formed between the different slats. It is clear that the foam forming mixture, which is laid down onto these slats, will penetrate somewhat in the gaps between the slats so that the bottom side of the foam layer will show seams formed by the material which has penetrated between the slats.

The object of the present invention is to propose a method for manufacturing a continuous foam layer as claimed in claim 1 which enables to avoid the gaps between the slats which are either due to the different temperatures to which the slats and the chain structure are subjected and/or to a stretching of the chain structure after prolonged use.

To this end, the method according to the invention is characterised in that when moving in said surface, the slats, which are slidably mounted in the rotation direction of the conveyor onto said chain structure, have such a length that, they push each other forward, relative to said chain structure, in the rotation direction of the conveyor.

The fact that the slats push each other forward may be due to a different thermal expansion coefficient of the slats and the chain structure and/or may be due to the fact that the length of the slats has been chosen somewhat greater than the length of the links of the chain structure. Due to the fact that the slats can slide with respect to the chain structure onto which they are mounted, a thermal expansion of the slats different from the thermal expansion of the chain structure is therefore possible without having to provide gaps between the slats in a certain area of the conveyor and/or the length of the slats may be greater than the length of the links onto which they are mounted so that they still engage one another even in case the chain structure has stretched somewhat due to wear.

In an advantageous embodiment of the method according to the invention, the chain structure comprises bearing plates rigidly mounted onto the links and provided for supporting the slats of the conveyor, the bearing plates being provided with slots extending in the longitudinal direction of the conveyor and the slats with pegs extending through the slots, or vice versa the slats being provided with the slots and the bearing plates with the pegs, for slidably mounting the slats onto the chain structure.

Other particularities and advantages of the invention will become apparent from the following description of some particular embodiments of the method for the manufacture of a continuous foam layer according to the present invention. The reference numerals relate to the annexed drawings wherein:
Figure 1 shows schematically a side elevational view of a device which can be used in the method according to the invention;
Figure 2 shows schematically a cross-sectional view according to lines II-II in Figure 1;

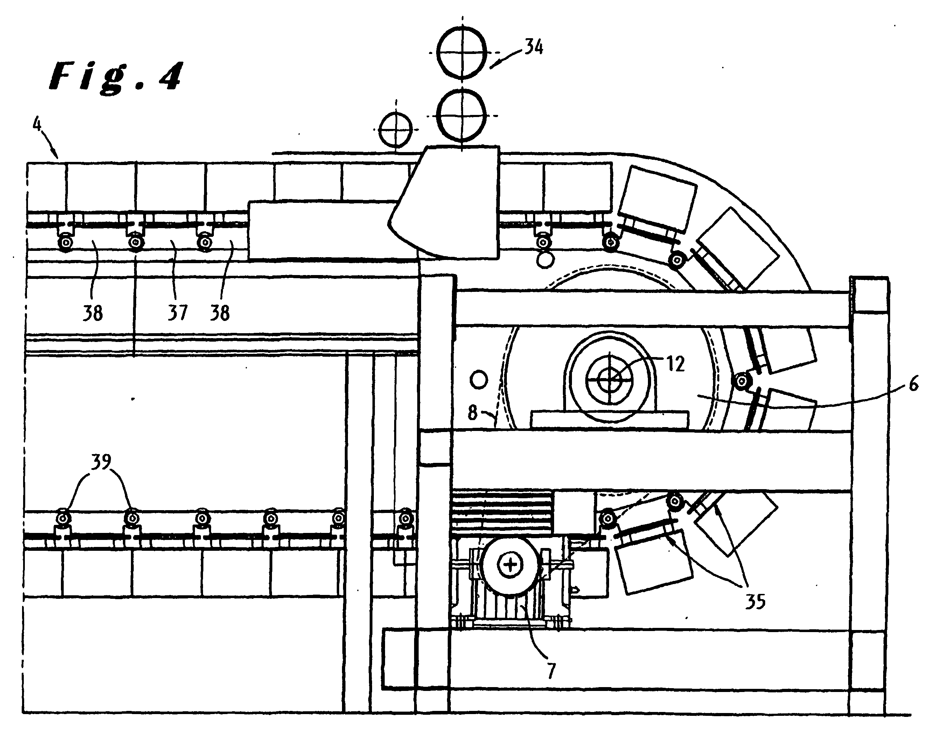

Figure 3 and 4 show schematically, on a larger scale, the first and respectively the second end of the conveyor of the device shown in Figure 1.
Figures 5 and 6 show respectively, on a larger scale, details V and VI of Figure 2, i.e. of the chain structure supporting the slats in the upper and lower part of the conveyor;
Figure 7 shows, on a larger scale, detail VII of Figure 2, i.e. of the guide mechanism for centering the slats;
Figure 8 shows the position of two slats on the plates of the chain structure respectively at the first and the second end of the conveyor shown in Figures 3 and 4; and
Figure 9 shows a top plan view on two successive slats of the device shown in Figure 1.

The device shown in the Figures is a device for the manufacture of a continuous layer 1 of latex foam. This latex foam may be made of natural or synthetic latex rubber or of a mixture of both. Instead of latex foam, the device can also be arranged to produce other foam materials in particular polyurethane foam. This latter foam is produced in practice on a bottom sheet of paper or plastic or between two cover layers but as will be explained hereafter, the present invention enables to omit these bottom sheets by preventing gaps between the slats of the conveyor onto which the foam is produced. Other foam materials which can be produced are for example polystyrene foams and phenolic foams.

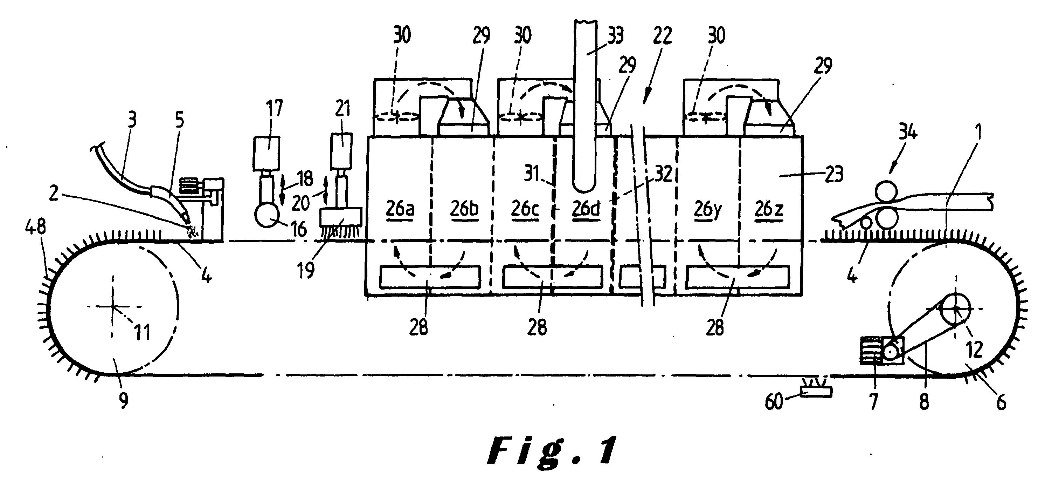

In the device shown schematically in Figure 1, the foam forming mixture, in particular the frothed latex foam mixture 2, is supplied through a supply duct 3 and deposited onto a rotating conveyor 4 through the intermediary of a foam distributor 5 which reciprocates transversally between the lateral edges of the conveyor 4. This conveyor 4 thus forms a mould surface onto which the foam layer 1 is produced. Before depositing the foam forming mixture onto the conveyor 4, this conveyor is treated with a mould release agent which is sprayed underneath the foaming device onto the conveyor 4 by means of a spraying unit 60.

At one end, the conveyor 4 is guided over two chain wheels 6 driven by a motor 7 through the intermediary of a drive chain 8 and, at the other end, it is guided over two freely rotating chain wheels 9. The two chain wheels 9 are mounted onto the opposite ends of an axis 11 and the two chain wheels 6 onto the opposite ends of an axis 12.

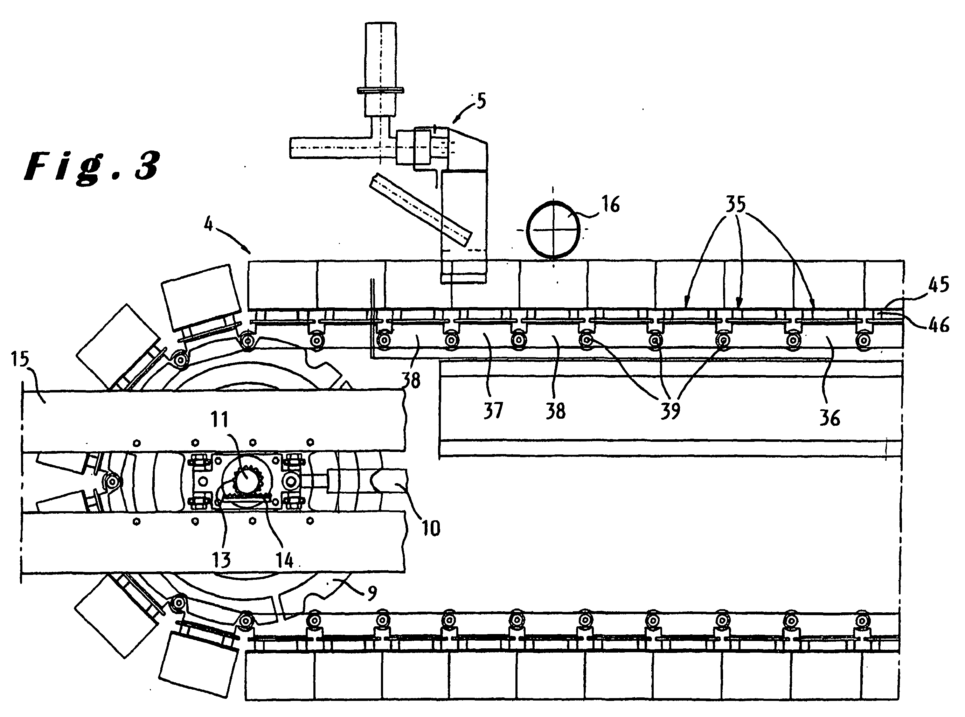

As shown in Figure 3, the chain wheels 9 can be displaced by means of a hydraulic piston-cylinder mechanism 10 to tension the conveyor 4. In order to keep the axis 11 of the chain wheels 9 parallel with the axis 12 of the driven chain wheels 6, two toothed wheels 13 are rigidly fixed onto the two extremities of the axis 11 and cooperate each with a toothed lath 14 fixed at both sides of the conveyor 4 onto the frame 15. When displacing the axis 11 of the chain wheels 9, the toothed wheels 13 will thus each roll over exactly the same distance over the corresponding toothed lath 14.

Turning back to Figure 1, the foam forming mixture 2 deposited by the foam distributor 5 onto the conveyor 4, is levelled by a doctor roller 16 or, alternatively by a doctor blade to produce a flat top. The doctor roller 16 is mounted onto a control mechanism 17 which enables to raise or lower this roller 16 according to arrow 18.

Downstream the doctor roller 16, there is a heating device, more particularly an infrared lamp 19. This lamp provides for a quick gelation of the top surface of the foam layer. It can be lowered and raised, according to arrow 20, by means of a control mechanism 21.

After the heating device 19, the foam layer passes through a heated zone, more particularly through a tunnel vulcanizer 22, wherein the foam is cured or vulcanized. It will be clear that this zone is particularly designed for the manufacture of latex foam and that, in case other foams are produced, which require no vulcanization, this heated zone can be omitted and replaced by another kind of curing zone.

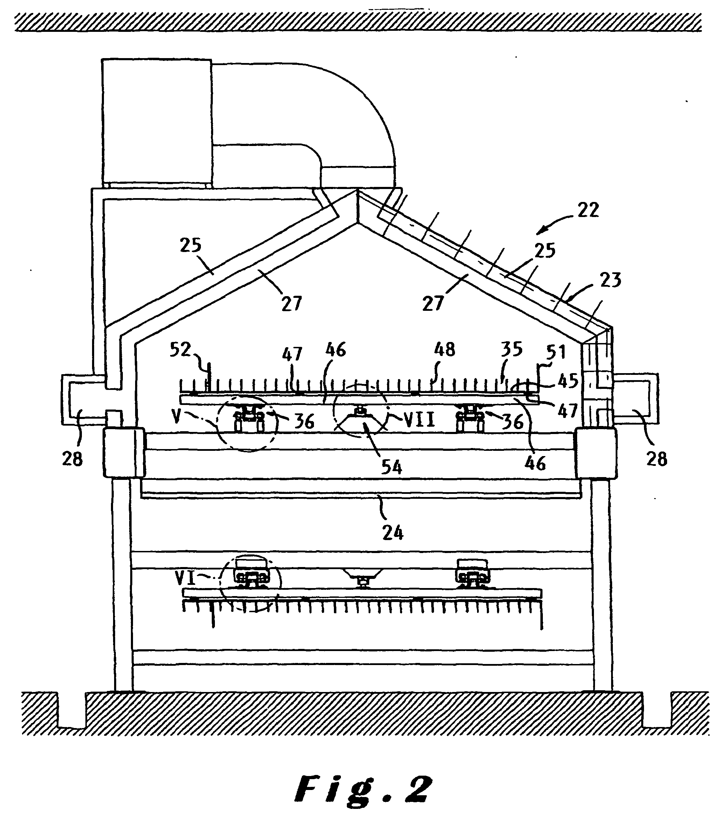

In the embodiment shown in Figures 1 and 2, the top and lateral sides of the tunnel vulcanizer 22 is formed by a double wall 23 whilst the bottom is formed by a closed plate 24. The outer side of the double wall 23 of the tunnel vulcanizer 22 is provided with an insulating layer 25.

As can be seen in Figure 1, the double wall 23 of the tunnel vulcanizer is subdivided into different sections 26 a-z. In both lateral sides, the interiors 27 of the double walls 23 of two successive sections 26 are connected two by two to one another by means of channels 28. On top of one section 26 b, d of each pair is provided a steam generator 29 and, on top of the section 26 a, c coupled to the first section, a suction unit 30. By the circulation of steam through the first sections 26 b, d the channels 28 and the second sections 26 a, c the inner wall of the tunnel vulcanizer 22 is heated for example to a temperature on the order of about 160°C.

In the tunnel vulcanizer 22, there are provided two partition walls 31 and 32, more particularly respectively before and after the fourth section 26 d. In the sections 26 e-z downstream the fourth section steam is injected within the interior of the tunnel vulcanizer 22 to vulcanize the foam. The fourth section 26 d of the tunnel vulcanizer 22 is provided with a suction unit 33 arranged to withdraw the steam, which passes the partition wall 32, out of this fourth section 26d. In this way, the foam is subjected to a dry vulcanization in the first three sections 26a -c. It has been found that this dry vulcanization step substantially reduces foam collapse. Further, by the use of heated walls 23, the steam does not condense onto these walls so that no water droplets can fall onto the top of the foam layer and can thus cause no superficial foam defects.

Downstream the tunnel vulcanizer 22, the foaming device comprises an assembly of rollers 34 arranged to remove the produced foam layer 1 from the conveyor 4. The foam layer 1 is then conveyed to a cutting unit (not shown) wherein the continuous foam layer is cut into pieces of the desired dimensions. The continuous foam layer can be cut in particular into mattresses, cushions or the like. In case of latex foam, the foam layer is washed and dried either before or after having been cut into foam pieces of the desired dimensions.

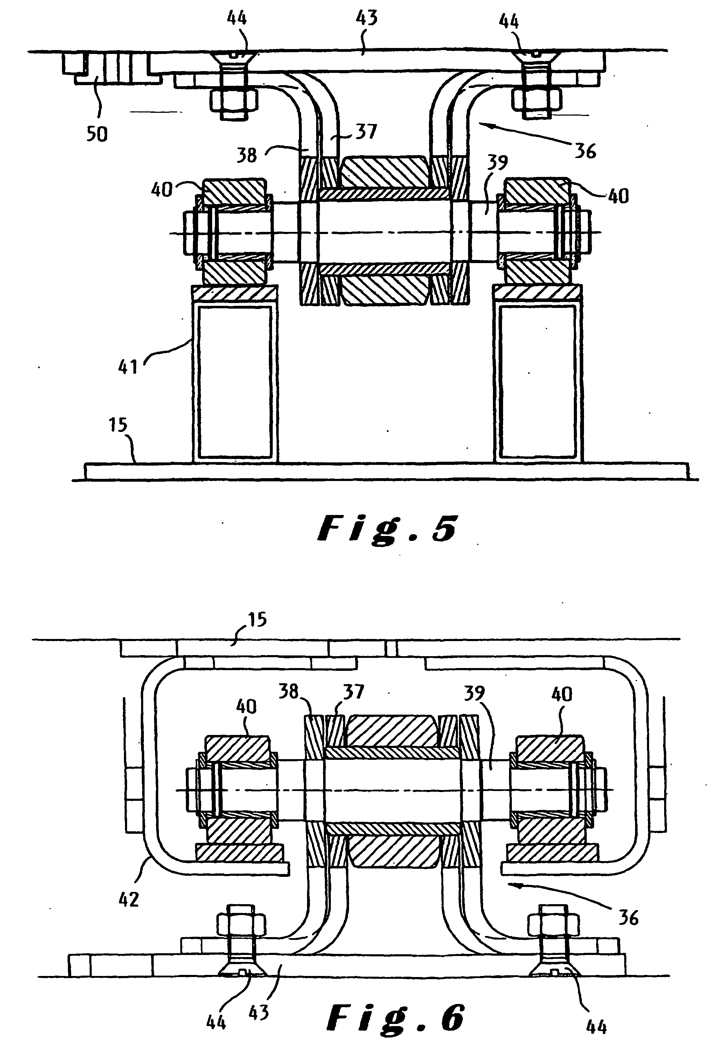

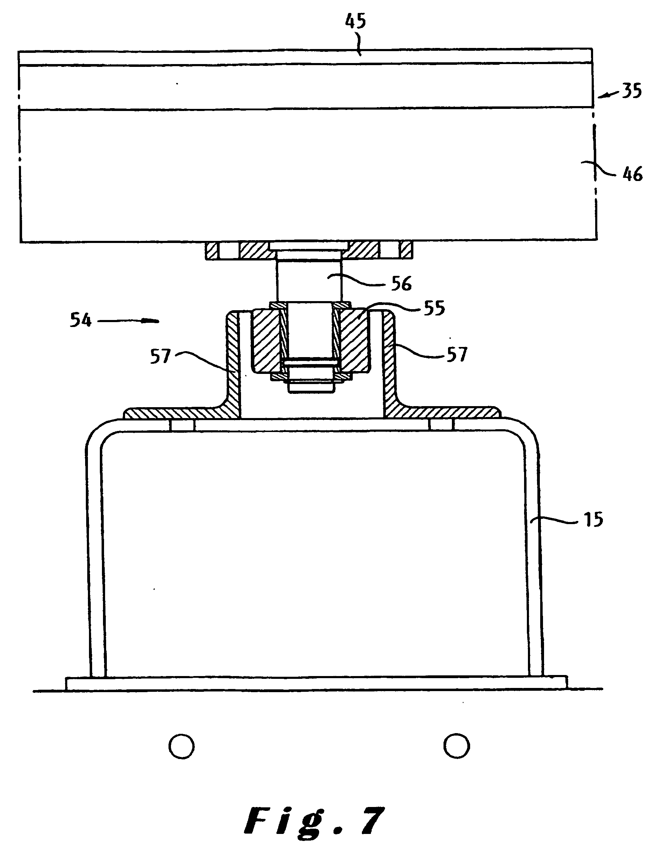

As already explained here-above, an important aspect of the present invention is the particular construction of the conveyor 4. This conveyor 4 consists of slats 35 mounted on links of a chain structure formed by two lateral chains 36 guided over the chain wheels 6 and 9. As can be seen in Figures 5 and 6, showing respectively a cross-section through the chains and their supporting structure in the top and bottom or returning part of the conveyor 4, the chains 36 are composed of inner 37 and outer links 38 hinge connected to one another by means of link shafts 39. These link shafts 39 project laterally from the outer chain links 38 and carry small steel wheels 40 supported by rails. In the top portion of the conveyor 4, these rails are formed by rectangular hollow iron bars 41 fixed onto the frame 15 whilst in the bottom portion, the rails are formed by a tubular casing 42 suspended from the frame 15.

For mounting the slats 35 onto the links 37, 38, both the inner 37 and outer links 38 extend upwards and are bend laterally outwards to form a supporting surface onto which a bearing plate 43 is rigidly fixed by means of bolts 44. In the embodiment shown in the figures, the slats 35 of the conveyor 4 have a length corresponding to the length of the links 37, 38 so that the inner 37 and the outer links 38 each carry a slat 35. One could however also consider the use of slats 35 having a length equal to twice the length of the links 37, 38 or more particularly to twice the distance between the axes of the link shafts. In this case, these slats are of course to be carried only by the inner or the outer chain links. Moreover, even longer slats could be used having a width equal to three, four or more times the distance between the axes of the link shafts 39 of the chain structure 36.

The slats 35 of the conveyor 4 could be formed by sufficiently thick plates. In the embodiment shown in the figures, the slats 35 are however formed by relatively thin plates 45, each supported by two longitudinal U-bars 46, through the intermediary of four short rods 47 arranged underneath the plates 45 in the transverse direction thereof. By positioning the U-bars 46 with their open side upwards underneath the plates 45 and by the interposition of the transverse bars 48 between the plates 45 and the U-bars 46, the steam can contact nearly the entire bottom surface of the plates 45 so that an optimal heat transfer can be achieved.

For the further heat transfer to the foam layer, pins 48 are fixed, in particular welded, to the top surface of the slats 35, which pins 48 are preferably solid pins 48 to enable a greater heat transfer. In view of the desired heat transfer the plates 45 and the pins 48 are preferably made of aluminium or an aluminium alloy. In order to avoid stresses in the slats 35, the transverse rods 47 and the U-bars 46 are preferably also made of this material.

In contrast to the slats 35, the chain structure 36 has to be made of a stronger and more wear resistant material, in particular of steel and more particular of stainless steel. Due to the different thermal expansion coefficient of aluminium and steel, problems arise in the above described device for avoiding gaps between the different slats 35. According to the invention, these problems have been solved by mounting the slats 35 in a slidable manner onto the chain structure 36 so that they can push each other forward, relative to the chain structure, in the rotation direction of the conveyor 4.

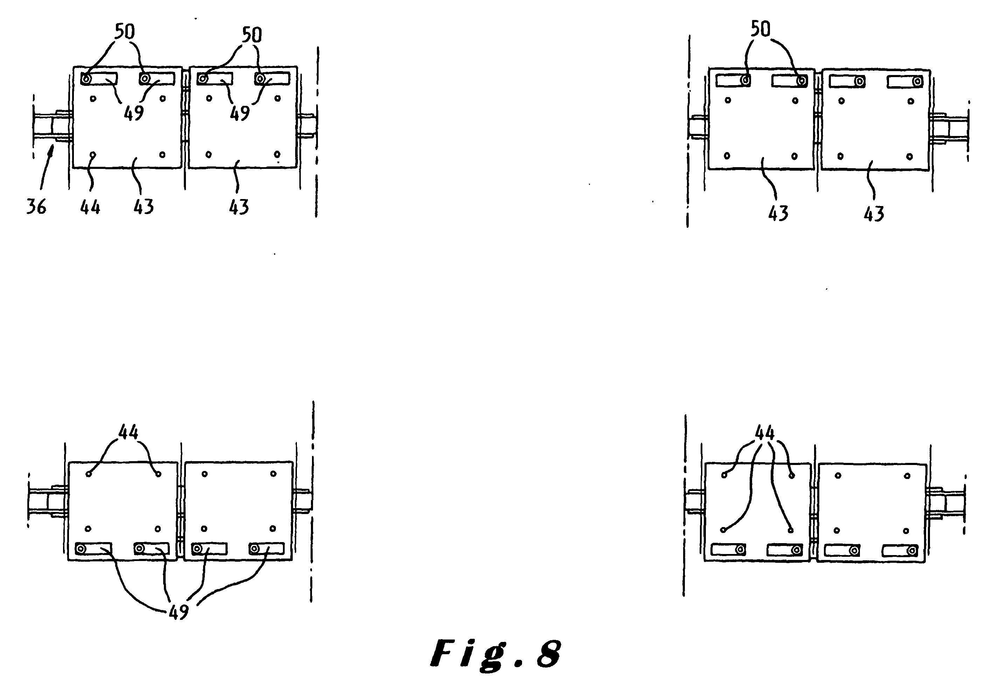

As can be seen in Figure 8, this has been achieved in the shown device by providing the bearing plates 43 with slots 49 extending in the longitudinal direction of the conveyor 4 and the slats 35, more particularly the U-bars 46 thereof, with pegs 50 extending through the slots 49 in such a manner that the U-bars 46 are fixed to the bearing plates 43 but still can slide relative thereto over a distance equal to the length of the slots 49. In an alternative embodiment, the slots 49 could of course be provided in the U-bars and the pegs could be fixed to the bearing plates.

When the slats 35 are carried by the chains 36 over the chain wheels 9 towards the foam distributor 5, the slats 35 are in the most backward position wherein the pegs 50 engage the backward end of the slots 49. This situation is shown on the left hand side of Figure 8. In this position, the slats 35 must have a length which is at least equal to the distance between the axes of the link shafts 39, so that when arriving in the flat plane below the foam distributor 5, they engage each other without leaving any gap.

When moving through the tunnel vulcanizer 22, the plates 45 and the chains 36 are heated so that they become longer. Due to the fact that the thermal expansion coefficient of aluminium or of an aluminium alloy is greater than the thermal expansion coefficient of stainless steel, the plates 45 will push each other forward, relative to the chains 36. This can be seen in the right hand side of Figure 8 where the pegs 50 have reached the most forward extremity the slots 39 in the bearing plates 43. Without the possibility of this relative movement, the plates 45 would either be damaged due to the thermal stresses which would be generated therein or they would have such a small length that gaps are created between the plates 45 when cooled down, in particular when passing below the foam distributor 5. In case of aluminium plates 46 having a length of 30 cm and steel chains 36, the minimum gaps would be on the order of about 0.4 mm taking into account a temperature difference of about 80°C and a linear thermal expansion coefficient for aluminium of 0.0239 mm/m/°C and for stainless steel of 0.011 mm/m/°C For a total conveyor length of about 45 m, this difference in thermal expansion would require a length of the slots 49 on the order of about 4 to 5 cm.

An important aspect of the present invention is that the above-described slidable connection between the slats 35 and the chains 36 can also be used to eliminate the consequences of chain elongation upon prolonged use. Indeed, the plates 45 can also be made somewhat longer than the distance between the axes of the link shafts 39, for example about 0.15 mm, so that the plates 45 push each other already forward at their lowest operational temperature, i.e. when passing below the foam distributor 5 and in particular even at room temperature. In order to enable such longer plates 45, the slots 49 have to be about 2 cm longer in case the total length of the conveyor comprises about 45 m and in case the slats 35 have a length of about 30 cm. It will be clear that in case the slats would be made of a material having a thermal expansion coefficient which is smaller than the thermal expansion coefficient of the chain structure, the slats can even be made longer so that they still engage each other when passing through the heated zone.

According to the invention, it has been found that in a latex foam production machine the pins 48 should preferably be positioned on regular distances of about 51 mm, measured at ambient temperature. Indeed, it has in particular been found that in this way, the holes made in the latex foam layer will be on regular distances of about 50 mm due to a foam shrinkage of about 2% calculated starting from the width of the slats 35 at room temperature. An important advantage of this regular distance between the holes in the foam layer is that the foam layer can be cut in foam pieces of regular standard widths, for example in mattresses of 80, 90, 95, 100, 120, 135, 140, 160, etc. wide, with the necessary cuts being each time made in the middle between two rows of holes. In this way, the lateral edges of the cut foam pieces never show the holes in the foam layer, and have always the same rigidity, in contrast to the prior art wherein some cuts are made through a row of holes. In the method according to the invention, the location where the foam layer has to be cut is preferably not simply determined by measuring the necessary width with a measuring device but is instead determined on the basis of the locations of the holes, i.e. the desired width can be determined by counting the number of holes and by cutting in the middle between two rows of holes.

In the above described foaming device, the distance of 51 mm between the pins could be obtained by means of slats 35 having a length of 306 mm and containing six rows of pins 48. Preferably, the links 37, 38 have then also a length of 306 mm. In case these links have however a length of only 300 mm as described hereabove, seven slats of 306 mm can be followed each time by one slat of 258 mm so that an average length of 300 mm is maintained. Of course, the slots 49 in the bearing plates 43 have to be shifted each time over about 6 mm in the longitudinal direction.

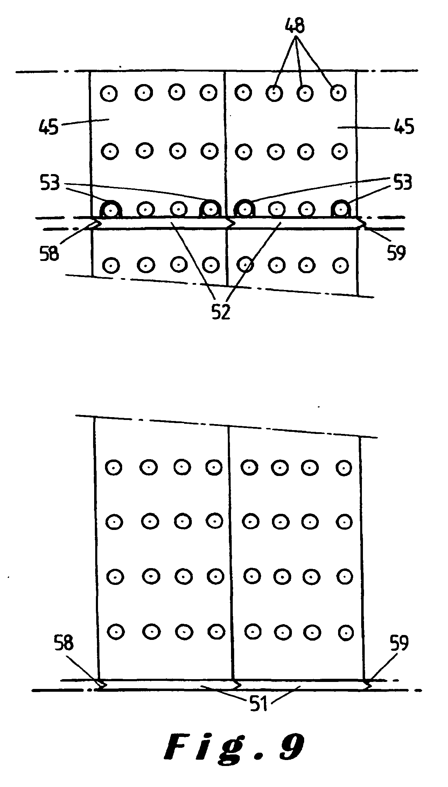

In the device illustrated in the Figures, the lateral sides of the produced foam layer 1 are defined by side walls 51, 52 fixed unto the slats 35. One of these side walls is a fixed side wall 51 whilst the other is a removable side wall 52 which can be mounted in different positions on the slats 35. As shown schematically in Figure 9, wherein for clarity's sake only four instead of six rows of pins have been shown, the removable side wall 52 is provided with braces 53 which are applied over the pins 48. These braces 53 can be tightened or clamped around the pins 48 by different mechanisms which are known by a person skilled in the art and which have therefore not been shown into detail in the Figures. In the most simple embodiment, the braces 53 can be tightened by means of screws but preferably, in order to enable a quick relocation of the side walls 52, a lever mechanism is provided so that only a handle has to be actuated for fixing or releasing the side walls 52.

In order to avoid visible defects in the lateral sides of the produced foam layer 1 due to an uneven alignment of the side walls 51, 52, the slats 35 are first of all guided by a central guiding mechanism 54 shown more into detail in Figure 7. This guiding mechanism 54 comprises a guiding wheel 55 rotatably mounted onto a shaft 56 which is fixed to the bottom of the U-bars 46 of the slats 35. The guiding wheel 55 is guided between two angle bars 57 fixed to the frame 15. A small clearance is provided between the guiding wheel 55 and the angle bars 57 in order to enable the guiding wheel to rotate. In addition to this first guiding mechanism 55, which provides for a first alignment of the side walls 51, 52, the side walls 51, 52 themselves are provided on one extremity with a groove 58 and on the other extremity with a preferably bevelled tooth 59 which penetrates into the groove 58 in the corresponding side wall of the adjacent slat 35. In this way, the side walls 51, 52 are perfectly aligned as can be seen in Figure 9.

From the here above given description. The principle of the slidable slats can be applied in particular to different types of continuous foaming machines wherein the slats do not necessarily have to be made of aluminium and the chains of steel. Indeed, in some applications the slats could be made of another metal, for example copper, or even of a synthetic material such as polyester while the chain structure could also for example be made of a synthetic material.

## Claims

1. A method for the manufacture of a continuous foam layer (1) starting from a foam forming mixture (2) and using a device comprising an endless conveyor (4) providing a surface arranged for producing the foam layer (1) thereon, means (7) for rotating the conveyor in one direction, means (5) for depositing said foam forming mixture (2) at a first end onto said surface, and means for removing the produced foam layer (1) at a second end from said surface, the conveyor (4) comprising a chain structure (36) which is guided at said first end over chain wheels (9) and at said second end over chain wheels (6) which are driven by a motor (7), and slats (35) which form said surface and which are mounted on links (37, 38) of a chain structure (36), said surface being laterally delimited by side walls (51, 52) mounted onto the slats (35) of the conveyor (4), in which method the endless conveyor (4) is rotated in said direction, the foam forming mixture (2) is deposited at said first end onto said surface of the rotating conveyor and the produced foam layer (1) is removed at said second end therefrom, **characterised in that** when moving in said surface, the slats (35), which are slidably mounted in the rotation direction of the conveyor (4) onto said chain structure (36), have such a length that they push each other forward, relative to said chain structure (36), in the rotation direction of the conveyor (4).

2. A method according to claim 1, **characterised in that** the slats (35) are made of a first material having a first thermal expansion coefficient whilst the chain structure (36) is made of a second material having a second thermal expansion coefficient, different from, in particular smaller than, said first thermal expansion coefficient.

3. A method according to claim 2, **characterised in that** said surface of the conveyor (4) runs through a heated (22) and a non- or less heated zone and the slats (35) have such a length that, when moving in said surface, they push each other forward, relative to said chain structure (36), at least when heated in the heated zone (22) as a result of the larger thermal expansion of the slats (35) compared to the thermal expansion of the chain structure (36).

4. A method according to claim 2 or 3, **characterised in that** the slats (35) have such a length that, when moving in said surface, they push each other forward, relative to said chain structure (36), even when being at their minimal operational temperature, in particular even at room temperature.

5. A method according to any one of the claims 1 to 4, **characterised in that** the slats (35) are made of aluminium or an aluminium alloy.

6. A method according to any one of the claims 1 to 5, **characterised in that** said chain structure (36) comprises at least two chains composed of links (37, 38) hinge connected to one another by means of link shafts (39) onto which wheels (40) are mounted, the device comprising further rails (41, 42) for supporting these wheels (40) at least in the area of said surface of the conveyor (4) which is arranged to produce the foam layer (1) thereon.

7. A method according to any one of the claims 1 to 6, **characterised in that** one extremity of said side walls (51, 52) shows a groove (58) in the end face thereof and the other extremity a preferably bevelled tooth (59) arranged to engage in the groove (58) provided in an adjacent side wall.

8. A method according to any one of the claims 1 to 7, **characterised in that** the slats (35) are provided with pins (48), preferably solid pins (48), arranged on said surface to project into the foam layer (1) produced thereon.

9. A method according to claim 8, **characterised in that** said pins (48) are provided in rows on regular distances, in the rotation direction of the conveyor (4), of 51 mm.

10. A method according to claim 8 or 9, **characterised in that** the side walls (52) on at least one side of the conveyor (4) being removably mounted, in different possible positions, by clamping means (53) on the pins (48) provided on the slats (35).

11. A method according to any one of the claims 1 to 10, **characterised in that** the chain structure (36) comprises bearing plates (43) rigidly mounted onto the links (37, 38) and provided for supporting the slats (35) of the conveyor (4), the bearing plates (43) being provided with slots (49) extending in the longitudinal direction of the conveyor (4) and the slats (35) with pegs (50) extending through the slots (49), or vice versa the slats being provided with the slots and the bearing plates with the pegs, for slidably mounting the slats (35) onto the chain structure (36).

12. A method according to any one of the claims 1 to 11, **characterised in that** the continuous foam layer (1) produced on said conveyor (4) is cut into single foam pieces.

13. A method according to claim 12, **characterised in that** in the continuous foam layer transverse rows of holes are produced by means of pins (48), preferably solid pins (48), arranged on said surface to project into the foam layer (1) produced thereon, the foam layer being cut in the middle between two successive rows of holes and the pins (48) being preferably provided in rows on regular mutual distances, in the rotation direction of the conveyor (4), of 51 mm.

14. A method according to any one of the claims 1 to 13, **characterised in that** a latex foam forming mixture (2) is deposited at said first end onto the conveyor (4) and is guided, onto said conveyer (4), through a tunnel vulcanizer (22) wherein steam is introduced to vulcanize the latex foam.

## Patentansprüche

1. Ein Verfahren zur Bildung einer kontinuierlichen Schaumschicht (1), ausgehend von einer Schaumbildungsmischung (2) und unter Verwendung einer Vorrichtung, welche ein Endlosförderband (4), das darauf mit einer Oberfläche zur Herstellung der Schaumschicht (1) versehen ist, Mittel (7) zur Rotation des Förderbands in eine Richtung, Mittel (5) zur Aufbringung der erwähnten Schaumbildungsmischung (2) an einem ersten Ende auf die erwähnte Oberfläche, und Mittel zur Abnahme der hergestellten Schaumschicht (1) an einem zweiten Ende der erwähnten Oberfläche umfasst, wobei das Förderband (4) eine Kettenstruktur (36) umfasst, die am erwähnten ersten Ende über Kettenräder (9) und am erwähnten zweiten Ende über Kettenräder (6) geführt wird, welche durch einen Motor (7) angetrieben werden, sowie Latten (35), die die erwähnte Oberfläche bilden und auf Verbindungsgliedern (37, 38) einer Kettenstruktur (36) montiert sind, wobei die erwähnte Oberfläche seitlich durch Seitenwände (51, 52) begrenzt ist, welche auf die Latten (35) des Förderbands (4) montiert sind, wobei das Endlosförderband (4) in diesem Verfahren in die erwähnte Richtung rotiert, die Schaumbildungsmischung (2) am erwähnten ersten Ende auf die erwähnte Oberfläche des rotierenden Förderbands aufgebracht wird und die hergestellte Schaumschicht (1) am erwähnten zweiten Ende davon abgenommen wird, **dadurch gekennzeichnet, dass** die Latten (35), die verschiebbar in die Rotationsrichtung des Förderbands (4) auf die erwähnte Kettenstruktur (36) montiert sind, bei der Bewegung in die erwähnte Oberfläche eine solche Länge haben, dass sie einander, in Bezug zur erwähnten Kettenstruktur (36) in die Rotationsrichtung des Förderbands (4), nach vorne schieben.

2. Ein Verfahren nach Anspruch 1, **dadurch gekennzeichnet, dass** die Latten (35) aus einem ersten Material mit einem ersten thermischen Expansionskoeffizienten bestehen, während die Kettenstruktur (36) aus einem zweiten Material mit einem zweiten thermischen Expansionskoeffizienten besteht, der anders, insbesondere geringer als der erwähnte erste thermische Expansionskoeffizient ist.

3. Ein Verfahren nach Anspruch 2, **dadurch gekennzeichnet, dass** die erwähnte Oberfläche des Förderbands (4) durch eine beheizte (22) und eine nicht oder weniger stark beheizte Zone läuft und die Latten (35) eine solche Länge haben, dass sie einander, wenn sie sich in die erwähnte Oberfläche bewegen, in Bezug auf die erwähnte Kettenstruktur (36) nach vorne schieben, zumindest wenn sie in der beheizten Zone (22) erwärmt werden, was auf die stärkere thermische Expansion der Latten (35) im Vergleich zur thermischen Expansion der Kettenstruktur (36) zurückzuführen ist.

4. Ein Verfahren nach Anspruch 2 oder 3, **dadurch gekennzeichnet, dass** die Latten (35) eine solche Länge haben, dass sie einander, wenn sie sich in die erwähnte Oberfläche bewegen, in Bezug auf die erwähnte Kettenstruktur (36) nach vorne schieben, auch wenn sie sich auf ihrer Mindestbetriebstemperatur befinden, insbesondere sogar bei Raumtemperatur.

5. Ein Verfahren nach einem der Ansprüche 1 bis 4, **dadurch gekennzeichnet, dass** die Latten (35) aus Aluminium oder einer Aluminiumlegierung hergestellt sind.

6. Ein Verfahren nach einem der Ansprüche 1 bis 5, **dadurch gekennzeichnet, dass** die erwähnte Kettenstruktur (36) zumindest zwei Ketten umfasst, die aus Verbindungsgliedern (37, 38) bestehen, welche mittels Gelenkschaften (39), an denen Räder (40) montiert sind, gelenkig miteinander verbunden sind, wobei die Vorrichtung weiters Schienen (41, 42) zur Unterstützung dieser Räder (40) umfasst, zumindest in dem Bereich der erwähnten Oberfläche des Förderbands (4), der ausgelegt ist, um darauf die Schaumschicht (1) zu produzieren.

7. Ein Verfahren nach einem der Ansprüche 1 bis 6, **dadurch gekennzeichnet, dass** ein Ende der erwähnten Seitenwände (51, 52) eine Nut (58) in deren Endkante aufweist und das andere Ende einen vorzugsweise abgeschrägten Zahn (59), der so angeordnet ist, um in die Nut (58) einzugreifen, die in der anliegenden Seitenwand angebracht ist.

8. Ein Verfahren nach einem der Ansprüche 1 bis 7, **dadurch gekennzeichnet, dass** die Latten (35) mit Nadeln (48), vorzugsweise festen Nadeln (48) ausgestattet sind, die auf der erwähnten Oberfläche angeordnet sind, um in die darauf hergestellte Schaumschicht (1) hineinzuragen.

9. Ein Verfahren nach Anspruch 8, **dadurch gekennzeichnet, dass** die erwähnten Nadeln (48) in Reihen in regelmäßigen Abständen, in Rotationsrichtung des Förderbands (4), von 51 mm angeordnet sind.

10. Ein Verfahren nach Anspruch 8 oder 9, **dadurch gekennzeichnet, dass** die Seitenwände (52) an zumindest einer Seite des Förderbands (4) abnehmbar montiert sind, in verschiedenen möglichen Positionen, und zwar mithilfe von Klemmvorrichtungen (53) auf den Nadeln (48), die auf den Latten (35) angeordnet sind.

11. Ein Verfahren nach einem der Ansprüche 1 bis 10, **dadurch gekennzeichnet, dass** die Kettenstruktur (36) Lagerplatten (43) umfasst, welche fix auf die Verbindungsglieder (37, 38) montiert sind und zur Stützung der Latten (35) des Förderbands (4) ausgelegt sind, wobei die Lagerplatten (43) mit Schlitzen (49), die sich in der Längsrichtung des Förderbands (4) ausdehnen, und die Latten (35) mit Stiften (50) ausgestattet sind, die sich durch die Schlitze (49) ausdehnen, oder umgekehrt die Latten mit den Schlitzen und die Lagerplatten mit den Stiften ausgestattet sind, damit die Latten (35) verschiebbar auf die Kettenstruktur (36) montiert sind.

12. Ein Verfahren nach einem der Ansprüche 1 bis 11, **dadurch gekennzeichnet, dass** die kontinuierliche Schaumschicht (1), die auf dem erwähnten Förderband (4) hergestellt wurde, in einzelne Schaumteile geschnitten wird.

13. Ein Verfahren nach Anspruch 12, **dadurch gekennzeichnet, dass** in der kontinuierlichen Schaumschicht mithilfe von Nadeln (48), vorzugsweise festen Nadeln (48), welche auf der erwähnten Oberfläche angeordnet sind, um in die darauf hergestellte Schaumschicht (1) hineinzuragen, quer gerichtete Reihen von Löchern angebracht werden, wobei die Schaumschicht in der Mitte zwischen zwei aufeinander folgenden Reihen von Löchern geschnitten wird und die Nadeln (48) vorzugsweise in Reihen in regelmäßigen Abständen, in der Rotationsrichtung des Förderbands (4), von 51 mm angeordnet sind.

14. Ein Verfahren nach einem der Ansprüche 1 bis 13, **dadurch gekennzeichnet, dass** eine Latex-Schaumbildungsmischung (2) auf dem erwähnten ersten Ende des Förderbands (4) aufgebracht wird und, auf dem erwähnten Förderband (4), durch einen Vulkanisiertunnel (22) geführt wird, in den Dampf eingeleitet wird, um den Latexschaum zu vulkanisieren.

## Revendications

1. Procédé pour fabriquer une couche continue (1) de mousse en partant d'un mélange (2) de formation de mousse et en utilisant un dispositif qui comprend :
un transporteur sans fin (4) sur lequel une surface est agencée pour la production de la couche (1) de mousse,
un moyen (7) qui fait tourner le transporteur dans un sens, un moyen (5) qui dépose ledit mélange (2) de formation de mousse à une première extrémité de ladite surface,
un moyen qui enlève la couche produite (1) de mousse à une deuxième extrémité de ladite surface,
le transporteur (4) comprenant une structure de chaîne (36) qui est guidée à ladite première extrémité par des roues (9) de chaîne et à ladite deuxième extrémité par des roues (6) de chaîne qui sont entraînées par un moteur (7),
et des tabliers (35) qui forment ladite surface et qui sont montés sur les maillons (37, 38) de la structure de chaîne (36),
ladite surface étant délimitée latéralement par des parois latérales (51, 52) montées sur les tabliers (35) du transporteur (4),
dans lequel procédé le transporteur sans fin (4) tourne dans ledit sens,
le mélange (2) de formation de mousse étant déposé à ladite première extrémité de ladite surface du transporteur rotatif,
la couche (1) de mousse produite étant enlevée à ladite deuxième extrémité de cette dernière,
**caractérisé en ce que** la longueur des tabliers (35) qui sont montés sur ladite structure de chaîne (36) à coulissement dans le sens de rotation du transporteur (4), est telle que lorsqu'ils sont déplacés sur ladite surface, ils se poussent mutuellement vers l'avant par rapport à ladite structure de chaîne (36) dans le sens de rotation du transporteur (4).

2. Procédé selon la revendication 1, **caractérisé en ce que** les tabliers (35) sont formés d'un premier matériau qui présente un premier coefficient de dilatation thermique, tandis que la structure de chaîne (36) est formée d'un deuxième matériau qui présente un deuxième coefficient de dilatation thermique qui est différent dudit premier coefficient de dilatation thermique et en particulier lui est inférieur.

3. Procédé selon la revendication 2, **caractérisé en ce que** ladite surface du transporteur (4) est déplacée dans une zone chauffée (22) et dans une zone non chauffée ou moins chauffée et **en ce que** la longueur des tabliers (35) est telle que lorsqu'ils sont déplacés sur ladite surface, ils se poussent mutuellement vers l'avant par rapport à ladite structure de chaîne (36) au moins lorsqu'ils sont chauffés dans la zone chauffée (22), parce que la dilatation thermique des tabliers (35) est supérieure à la dilatation thermique de la structure de chaîne (36).

4. Procédé selon les revendications 2 ou 3, **caractérisé en ce que** la longueur des tabliers (35) est telle que lorsqu'ils sont déplacés sur ladite surface, ils se poussent mutuellement vers l'avant par rapport à ladite structure de chaîne (36) même lorsqu'ils sont à leur température minimale de fonctionnement et en particulier même à température ambiante.

5. Procédé selon l'une quelconque des revendications 1 à 4, **caractérisé en ce que** les tabliers (35) sont formés d'aluminium ou d'un alliage d'aluminium.

6. Procédé selon l'une quelconque des revendications 1 à 5, **caractérisé en ce que** ladite structure de chaîne (36) comprend au moins deux chaînes constituées de maillons (37, 38) reliés les uns aux autres de manière articulée au moyen d'arbres de liaison (39) sur lesquels des roues (40) sont montées, le dispositif comprenant en outre des rails (41, 42) qui soutiennent ces roues (40) au moins dans la zone de ladite surface du transporteur (4) qui est agencée pour y produire la couche (1) de mousse.

7. Procédé selon l'une quelconque des revendications 1 à 6, **caractérisé en ce qu'**une extrémité desdites parois latérales (51, 52) présente une rainure (58) dans son côté d'extrémité et **en ce que** l'autre extrémité présente une dent (59), de préférence biseautée, agencée pour engager la rainure (58) ménagée dans la paroi latérale adjacente.

8. Procédé selon l'une quelconque des revendications 1 à 7, **caractérisé en ce que** les tabliers (35) sont dotés de broches (48), de préférence des broches pleines (48), agencées sur ladite surface de manière à déborder dans la couche (1) de mousse produite sur cette dernière.

9. Procédé selon la revendication 8, **caractérisé en ce que** lesdites broches (48) sont prévues en rangées à intervalles réguliers de 51 mm dans le sens de rotation du transporteur (4).

10. Procédé selon les revendications 8 ou 9, **caractérisé en ce que** sur au moins un côté du transporteur (4), les parois latérales (52) sont montées de manière libérable, dans différentes positions possibles, à l'aide d'un moyen de fixation (53) situé sur les broches (48) prévues sur les tabliers (35).

11. Procédé selon l'une quelconque des revendications 1 à 10, **caractérisé en ce que** la structure de chaîne (36) comprend des plaques de support (43) montées fixement sur les maillons (37, 38) et prévues pour soutenir les tabliers (35) du transporteur (4), les plaques de support (43) étant dotées de fentes (49) qui s'étendent dans le sens de la longueur du transporteur (4), les tabliers (35) étant dotés de chevilles (50) qui s'engagent dans les fentes (49) ou, inversement, les tabliers étant dotés de fentes et les plaques de support étant dotées de chevilles, pour monter à coulissement les tabliers (35) sur la structure de chaîne (36).

12. Procédé selon l'une quelconque des revendications 1 à 11, **caractérisé en ce que** la couche continue (1) de mousse produite sur ledit transporteur (4) est découpée en pièces individuelles de mousse.

13. Procédé selon la revendication 12, **caractérisé en ce que** les rangées transversales de trous de la couche continue de mousse sont produites au moyen de broches (48), de préférence des broches pleines (48), agencées sur ladite surface de manière à déborder dans la couche (1) de mousse produite sur cette dernière, la couche de mousse étant coupée au milieu entre deux rangées successives de trous, les broches (48) étant de préférence prévues en rangées à intervalles réguliers de 51 mm dans le sens de rotation du transporteur (4).

14. Procédé selon l'une quelconque des revendications 1 à 13, **caractérisé en ce qu'**un mélange (2) de formation de mousse de latex est déposé à ladite première extrémité du transporteur (4) et guidé sur ledit transporteur (4) dans un tunnel de vulcanisation (22) dans lequel de la vapeur d'eau est introduite pour vulcaniser la mousse de latex.
